# EUROPEAN PATENT APPLICATION

(11) **EP 1 293 418 A2**
(43) Date of publication of application: **19.03.2003**
(21) Application number: 02079883.1
(22) Date of filing: 09.05.2000
(51) Int. Cl.: B62D 33/067

(54) **Vehicle with a tiltable cab**

(30) Priority: 10.05.1999 NL 1012014
(62) Divisional of application: 00927961.3
(71) Applicant: Actuant Corporation, Glendale, Wisconsin 53209-3703 (US)
(72) Inventor: Damhuis, Erwin Bernardus Johannes, 7555 KK Hengelo (NL)
(74) Representative: Brookhuis, Hendrik Jan Arnold

(57) **Abstract**

Vehicle comprising a chassis and a cab which can be tilted with respect to the chassis, a hydraulic tilting actuator being arranged between the chassis and the cab for tilting the cab, which tilting actuator has one or more connections for the supply and/or removal of hydraulic fluid, a pump (60), which can be driven by a motor, also being attached to the vehicle for the purpose of supplying pressurized hydraulic fluid to the tilting actuator, as well as a reservoir for hydraulic fluid, the pump having a rotatable drive member (61,62) for driving the pump using a motor, characterized in that the drive member (62) is accessible on the outside of the pump for the purpose of coupling the drive member (62) to a motor which is not attached to the vehicle.

## Description

The present invention relates to the tilting of the cab of a vehicle, which cab can be tilted between a driving position, in which the vehicle can be driven normally, and a tilted-forward position, in which, for example, maintenance can be carried out on the engine located beneath the cab.

In view of the relatively high weight of tiltable (lorry) cabs, nowadays virtually all lorries are fitted with a hydraulic tilting device for tilting the cab, the tilting device comprising a hydraulic tilting actuator and a pump which is mounted on the chassis of the vehicle. The hydraulic tilting actuator may be a linear actuator of the double-acting type with two connections, which are each connected to an associated working chamber of the actuator. There are also vehicles in which the hydraulic tilting actuator is of the single-acting type having a single working chamber and an associated single connection.

The present invention provides a vehicle according to claim 1. As is known, many vehicles which are provided with a hydraulically tiltable cab have a pump unit comprising a hydraulic pump, an electric motor for driving the pump and a reservoir for hydraulic fluid. Consequently, it is possible to tilt the cab by actuating the electric motor. Furthermore, vehicles are known which, in addition to this pump unit, also have a hand pump in order for it to be possible to tilt the cab if the electric pump unit is not working, in particular because there is no electric voltage for powering the electric motor. Although the cab is tilted infrequently, mechanics in workshops and of travelling maintenance services attach particular value to the possibility of tilting the cab without physical effort. However, the electric motor forms an expensive part of the tilting device, inter alia owing to the abovementioned resistance to the influences of weather. The invention provides for the electric motor not to be fitted permanently to the pump, as in the known vehicles, and for the pump to be provided with a drive member which is accessible from the outside and to which a separate, preferably portable, motor can be coupled when the cab is to be tilted. This motor, may, for example, be a pneumatic wrench, which is present as standard in most workshops and with travelling maintenance services. If the vehicle is provided with an additional hand pump for tilting the cab, the tilting of the cab can then be carried out even if the separate motor is not nearby.

In a particular variant of the invention, however, the seperate portable motor is part of a cordless electric power tool, such as a screw-driver or drilling tool. Preferably such a tool has a rechargeable battery. Preferably the vehicle is provided with a dedicated storage facility for such a power tool, which may be fitted with a battery charger.

A portable tool of this nature is available as a standard product and has sufficient capacity to drive the pump of a hydraulic tilting device.

In a variant of the invention, it is possible for the pump in fact to be provided with an electric motor which is attached permanently thereto, in which case the pump can also be driven using a separate motor, by means of the rotatable drive member. As a result, the pump can be actuated even if the permanently fitted electric motor is not working, for example if there is no electric voltage or if there is a fault in the electric motor.

It will be clear that the various aspects of the invention can be used in different combinations.

The various aspects of the present invention and advantageous embodiments thereof are described in the claims and the following description with reference to the drawing, in which:
Fig. 1 shows a diagrammatic side view of the front section of a vehicle with a driver's cab tilted forwards and a hydraulic tilting device according to the prior art, and
Fig. 2 shows an exemplary embodiment of a pump according to the third aspect of the invention.

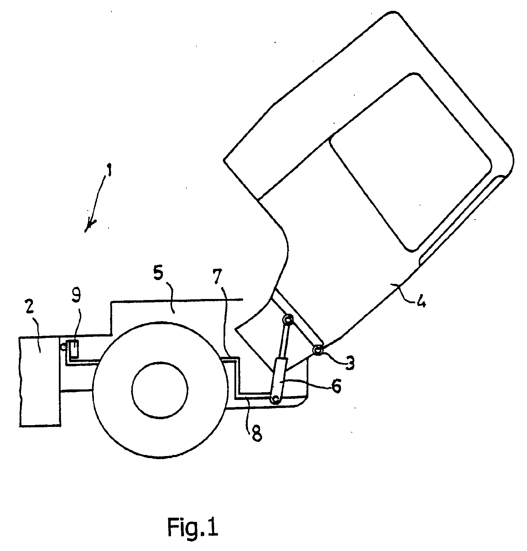

Figure 1 diagrammatically depicts the front section of a vehicle 1, having a chassis 2 and a driver's cab 4 which can tilt with respect to the chassis 2 about pivot means 3 and in this drawing is shown in a tilted-forward position. The cab 4 is in this case tiltable in order to provide access to the engine 5 of the vehicle 1. Furthermore, a hydraulic tilting actuator 6, which is mounted between the chassis 2 and the cab 4 and is used to tilt the cab 4, can be seen.

The tilting actuator 6 is in this case a double-acting linear actuator with a piston rod which can be extended and retracted, the piston delimiting two working chambers of variable volume. The tilting actuator 6 has two connections, which are each in communication with one of the working chambers, for the supply and/or removal of hydraulic fluid.

Two hydraulic fluid lines 7, 8, which are mounted on the chassis 2, connect to these connections of the tilting actuator 6.

Figure 1 also shows, as is generally known, a pump unit 9 with a hydraulic pump and with an associated reservoir for hydraulic fluid, which is mounted on the chassis 2 of the vehicle. The pump unit 9 has two connections, to which the lines 7, 8 are fixedly connected, and furthermore has an actuable valve, so that pressurized hydraulic fluid can be supplied to one or other working chamber of the tilting actuator 6 as desired.

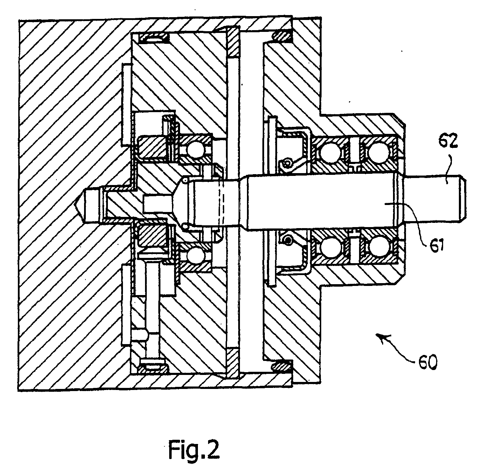

Figure 2 shows a cross section through a pump 60 which is fitted on a vehicle (not shown in more detail) with a hydraulically tiltable cab. The pump 60 is used to supply pressurized hydraulic fluid to the tilting actuator and is in this case a radial plunger pump of generally known type. The pump 60 has a drive shaft 61 which is mounted rotatably in the housing of the pump 60 and an end 62 of which projects out of the housing. The end 62 is provided with a spanner formation, for example a keyway, hexagon or hexagon socket, etc., in such a manner that the drive shaft 61 can be coupled to a motor which is not attached to the vehicle.

In a variant which is not shown, an electric motor is attached to the housing of the pump, the rotatable shaft of which motor lies in line with the pump shaft 61 and is connected thereto. In this case, the motor shaft may be externally accessible at the end which is remote from the pump, in order for it to be possible for the pump to be driven by a separate motor, for example a (cordless) electric screw-driver, drilling tool or pneumatic wrench, if the electric motor which is permanently attached to the pump is not working.

## Claims

1. Vehicle comprising a chassis and a cab which can be tilted with respect to the chassis, a hydraulic tilting actuator being arranged between the chassis and the cab for tilting the cab, which tilting actuator has one or more connections for the supply and/or removal of hydraulic fluid, a pump, which can be driven by a motor, also being attached to the vehicle for the purpose of supplying pressurized hydraulic fluid to the tilting actuator, as well as a reservoir for hydraulic fluid, the pump having a rotatable drive member for driving the pump using a motor, **characterized in that** the drive member is accessible on the outside of the pump for the purpose of coupling the drive member to a motor which is not attached to the vehicle.

2. Vehicle according to claim 1, in which the drive member projects out of the housing of the pump.

3. Vehicle according to claim 1 or 2, in which the motor is portable.

4. Vehicle according to claim 3, in which the motor is electric and, together with an associated battery, forms part of a portable unit, preferably of a cordless electric power tool, such as a screw-driver and/or drilling tool.

5. Vehicle according to claim 4, in which the battery is rechargeable and the vehicle is provided with a charging device for recharging the battery.

6. Vehicle according to one or more of claims 1-5, in which the drive member is provided with a spanner formation, preferably a hexagon nut shape or a socket head wrench recess, for the purpose of coupling the drive member to the motor.

7. Vehicle according to one or more of the preceding claims 1-6, in which a lock is provided for closing access to the drive member or preventing rotation of the drive member.

8. Vehicle according to one or of claims 1-7 in which a manually drivable pump for supplying pressurized fluid to the actuator is fixedly mounted on the vehicle.
